# EUROPÄISCHE PATENTANMELDUNG

(11) **EP 3 148 094 A1**
(43) Veröffentlichungstag der Anmeldung: **29.03.2017**
(21) Anmeldenummer: 15186266.1
(22) Anmeldetag: 22.09.2015
(51) Int. Cl.: H04B 3/02, H04B 3/54

(54) **ÜBERMITTELN VON FEHLERSIGNALEN IN EINEM NETZWERK**

(71) Anmelder: Siemens Aktiengesellschaft, 80333 München (DE)
(72) Erfinder: Linzmaier, Klaus-Peter, 73650 Winterbach (DE); Kufner, Gunther, 70374 Stuttgart (DE)

(57) **Zusammenfassung**

Die Erfindung betrifft ein Verfahren zum Übermitteln von Fehlersignalen (FLT) in einem Netzwerk (10), insbesondere in einem Schleifleiternetzwerk, zwischen einem ortsfesten Teil (12) des Netzwerks (10) und einem beweglichen Netzwerkteilnehmer (14) wobei in dem Netzwerk (10) Daten (D) in einem ersten Frequenzbereich (f1) gesendet und/oder empfangen werden. Um ein Verfahren anzugeben, das es ermöglicht, Fehlersignale (FLT) in einem Netzwerk (10) schnell und sicher zu übertragen, werden eine Master-Meldeeinheit (M-ME) und mindestens eine Slave-Meldeeinheit (S-ME) vorgeschlagen, die Fehlersignale (FLT) außerhalb des ersten Frequenzbereichs (f1) senden und/oder empfangen. Die Erfindung hat weiterhin die Aufgabe, eine Meldeeinheit (M-ME, S-ME) und ein Netzwerk (10) zur Durchführung des Verfahrens anzugeben.

## Beschreibung

Die Erfindung betrifft ein Verfahren zum Übermitteln von Fehlersignalen in einem Netzwerk sowie eine Meldeeinheit zum Durchführen eines solchen Verfahrens und ein Netzwerk mit Meldeeinheiten zum Durchführen eines solchen Verfahrens.

Ein derartiges Verfahren kommt beispielsweise in einem Schleifleiternetzwerk einer industriellen Hängebahn oder auch Elektrohängebahn-Anlagen (EHB-Anlagen) zum Einsatz. Weitere Anwendungen existieren beispielsweise bei Regalbediengeräten, Flurförderzeugen, Krananlagen, Aufzügen und Hebezeugen, Verschiebewägen und Fahrgeschäften. Elektrohängebahnen bestehen aus einer stationären Anlagensteuerung und Energieversorgung, dem Schienensystem und den mobilen Fahrzeugen. Die mobilen Fahrzeuge sind entweder über Kontaktanordnungen oder Abnehmer, insbesondere Schleifer, mit festen Stromschienen, Schleifleitern oder Schleifringen verbunden oder es werden Schleppkabel eingesetzt.

Der Erfindung liegt die Aufgabe zugrunde, ein Verfahren anzugeben, das es ermöglicht, Fehlersignale in einem Netzwerk schnell und sicher zu übertragen. Die Erfindung hat weiterhin die Aufgabe, eine Meldeeinheit und ein Netzwerk zur Durchführung des Verfahrens anzugeben.

Die Aufgabe wird durch ein Verfahren zum Übermitteln von Fehlersignalen in einem Netzwerk, insbesondere in einem Schleifleiternetzwerk, mit den im Anspruch 1 angegebenen Merkmalen gelöst. Hierbei werden im Netzwerk zwischen einem ortsfesten Teil des Netzwerks und einem beweglichen Netzwerkteilnehmer Daten in einem ersten Frequenzbereich gesendet und/oder empfangen und eine Master-Meldeeinheit und mindestens eine Slave-Meldeeinheit senden und/oder empfangen Fehlersignale außerhalb des ersten Frequenzbereichs.

Fehlersignale können dabei jegliche Signale sein, die einen Fehler im Netzwerk oder den daran angeschlossenen Systemen anzeigen. Bei Elektrohängebahnen kann dies beispielsweise der Fall sein, wenn sich ein Hindernis auf der Strecke befindet oder gar ein schneller Stopp von Nöten ist. Die Verarbeitung eines solchen Fehlersignales kann dann eine komplette Abschaltung der Anlage oder von einzelnen Fahrzeugen nach sich ziehen. Das Netzwerk kann als Schleifleiternetzwerk ausgebildet sein, das beispielsweise mittels Powerline-Kommunikation auf Schleifleitern aufmoduliert ist. Der bewegliche Netzwerkteilnehmer kann ein Fahrzeug in einer Elektrohängebahn oder alternativ weitere gegenüber dem stationären Teil des Netzwerks bewegliche Elemente sein. Die Datenübertragung vom stationären Teil des Netzwerks zum beweglichen Teil des Netzwerks wird dabei in einem ersten Frequenzbereich durchgeführt. Hierbei kann es sich um einfaches Ethernet oder auch um Powerline-Kommunikation handeln. Auch eine Übertragung über drahtlose Protokolle ist hier denkbar. Um einen weiteren Kommunikationskanal zur Verfügung zu stellen, der vorteilhaft neben dem Transfer von Daten im ersten Frequenzbereich zur Verfügung steht, senden und/oder empfangen Meldeeinheiten außerhalb des ersten Frequenzbereichs Fehlersignale. Die Daten, die im ersten Frequenzbereich übertragen werden, können dabei einfache Steuerbefehle, beispielsweise in Form von Telegrammen, einer zentralen Anlagensteuerung sein, die mit den beweglichen Netzwerkteilnehmern kommuniziert. Besonders vorteilhaft ist dabei, dass zwei getrennte Kommunikationskanäle zur Verfügung stehen und so ein höheres Sicherheitsniveau erreicht werden kann.

In einer weiteren Ausführungsform werden die Fehlersignale über dasselbe Übertragungsmedium, insbesondere über dieselben Datenleiter übertragen, wie die Daten im ersten Frequenzbereich. Dies ist besonders vorteilhaft, da so keine weitere Übertragungsinfrastruktur für Fehlersignale implementiert werden muss.

In einer weiteren Ausführungsform werden die Fehlersignale in einem zweiten Frequenzbereich übermittelt. Der zweite Frequenzbereich ist dabei vorzugsweise ein Frequenzbereich, der sich nicht mit dem ersten Frequenzbereich überschneidet. Es ist denkbar, dass in dem zweiten Frequenzbereich nur Frequenzen enthalten sind, die deutlich niedriger sind als die Frequenzen, die zur Datenübertragung im ersten Frequenzbereich verwendet werden. So erhält man vorteilhafterweise nicht nur einen entkoppelten zweiten Kanal, sondern auch einen rein durch physikalische Frequenztrennung getrennten Kanal. Dies erhöht die Sicherheit weiter.

In einer weiteren Ausführungsform weist der erste Frequenzbereich Frequenzen ab 1 MHz auf. Der Frequenzbereich ab 1 MHz ermöglicht es, beispielsweise bekannte Technologien wie Homeplug AV oder Ethernet zu verwenden.

In einer weiteren Ausführungsform weist der zweite Frequenzbereich Frequenzen unterhalb von 1 MHz, insbesondere unterhalb von 100 Hz, auf. Die Begrenzung des zweiten Frequenzbereichs auf Frequenzen bis 1 MHz, insbesondere auf Frequenzen bis 100 Hz, ermöglicht es, die Signale der Daten im ersten Frequenzbereich effektiv von den Fehlersignalen zu trennen. Da für die Fehlersignale keine hohe Datenrate erforderlich ist, sind solche niedrigen Frequenzen möglich und vorteilhaft anwendbar.

In einer weiteren Ausführungsform wird ein erstes Fehlersignal als ein Spannungssignal übertragen. Die Übertragung des Fehlersignals als Spannungssignal ist eine Möglichkeit, die Fehlersignale zu übertragen. Dabei ist es denkbar, dass im einfachsten Fall das Anliegen einer bestimmten Spannung oder eines bestimmten Spannungspegels als so genanntes "active high" signalisiert, dass kein Fehler vorliegt und das Ausbleiben des Spannungspegels einen Fehler signalisiert. Weiterhin ist denkbar, dass ein derartiges Spannungssignal über ein Signal mit einer bestimmten Frequenz, Amplitude oder weitere Modulation übertragen wird.

In einer weiteren Ausführungsform wird ein zweites Fehlersignal als ein Stromsignal übertragen. Als Ergänzung oder als Alternative zum Spannungssignal kann ein zweites Fehlersignal auch als Stromsignal übertragen werden. Das Stromsignal kann dabei beispielsweise als Fehlerstrom ausgebildet sein.

Die Tatsache, dass hier ein erstes und ein zweites Fehlersignal aufgeführt sind, soll weder eine Rangordnung noch eine zeitliche Reihenfolge der beiden Signale darstellen oder implizieren. Es soll damit zum Ausdruck gebracht werden, dass prinzipiell diese beiden Signalformen zur Verfügung stehen.

In einer besonders vorteilhaften Ausführungsform wird ein Not-Halt- oder Not-Aus-Signal als Fehlersignal übertragen. Eine mögliche Weiterbildung ist also, Not-Halt- oder Not-Aus-Signale als Fehlersignale zu übertragen. Dies ist möglich, da die Meldeeinheiten einen weiteren unabhängigen Kommunikationskanal zu Verfügung stellen und so ein sicheres Übertragen solcher Signale möglich ist.

Eine besonders vorteilhafte Weiterbildung ist weiterhin, wenn die Fehlersignale schneller übertragen werden als die Daten im ersten Frequenzbereich des Netzwerks. Dass Fehlersignale schneller übertragen werden als die Daten im ersten Frequenzbereich soll hier nicht zwangsläufig die tatsächliche Laufzeit der Nachrichten im Netzwerk wiederspiegeln sondern die effektive komplette Übertragungszeit nach der eine Reaktion, wie beispielsweise ein Anhalten aller Fahrzeuge, erfolgen kann. Da die Fehlersignale einen eigenen Verarbeitungspfad aufweisen, kann auf diese auch deutlich schneller reagiert werden.

Die Aufgabe wird weiterhin gelöst durch eine Meldeeinheit zur Durchführung eines erfindungsgemäßen Verfahrens, aufweisend ein Filterelement, das zur Trennung der Fehlersignale von den Daten des ersten Frequenzbereichs ausgebildet ist. Das Filterelement kann dabei ein einfaches analoges LC-Filter sein, es können aber ebenso digitale Filter zum Einsatz kommen. Die Hauptaufgabe des Filterelements ist es dabei, die Signale des ersten Frequenzbereichs von der Meldeeinheit fernzuhalten und so eine zuverlässige Signalverarbeitung der Fehlersignale zu ermöglichen.

In einer vorteilhaften Weiterbildung einer Meldeeinheit ist das Filterelement zur Trennung der Daten des ersten Frequenzbereichs von den Fehlersignalen des zweiten Frequenzbereichs ausgebildet. Das Filterelement kann auch als Frequenzweiche ausgebildet sein, d.h., die Fehlersignale im zweiten Frequenzbereich an die Meldeeinheit weiterleiten und beispielsweise die Signale oder die Daten des ersten Frequenzbereichs durch leiten, beispielsweise an ein Modem.

In einer vorteilhaften Weiterbildung einer Meldeeinheit weist diese eine Strom-Messvorrichtung zur Erfassung eines Stromsignals auf. Die Strommessvorrichtung kann dabei als ein Mess-Shunt oder als eine Hall-Sensor-Anordnung ausgebildet sein. Es ist denkbar, dass die Höhe des gemessenen Stromes verschiedene Fehlerniveaus oder Fehlerlevels signalisiert. Damit wären mehrere Fehler als Stromsignale abbildbar.

In einer vorteilhaften Weiterbildung einer Meldeeinheit, weist diese eine Spannungs-Messvorrichtung zur Erfassung eines Spannungssignals auf. Die Spannungs-Messvorrichtung kann dabei als einfacher Spannungssensor ausgebildet sein. Es ist aber ebenso denkbar, dass die Spannungs-Messvorrichtung einen Analog/Digital-Wandler aufweist, der komplexere Signale erfassen kann.

In einer vorteilhaften Weiterbildung einer Meldeeinheit, weist diese einen Spannungssignal-Generator zur Generierung eines Spannungssignals auf. Die einfachste Form eines Spannungssignal-Generators kann dabei ein Schalter sein, der ein vorhandenes Potential auf Masse zieht. Es ist aber ebenso denkbar, dass hier Frequenzgeneratoren oder sogar Modulationsverfahren zum Einsatz kommen.

In einer vorteilhaften Weiterbildung einer Meldeeinheit, weist diese einen Stromsignal-Generator zur Generierung eines Stromsignals auf. Ein Stromsignal-Generator kann dabei beispielsweise eine Stromsenke sein, deren Zuschaltung einen definierbaren Strom in das Netzwerk einprägt. Es ist denkbar, dass über verschiedene Stromlevels verschiedene Fehlersignale übertragen werden können.

In einer besonders vorteilhaften Weiterbildung der Meldeeinheit ist diese zur Übermittlung von Fehlersignalen über ein Übertragungsmedium, über das die Daten im ersten Frequenzbereich übertragen werden, insbesondere über dieselben Datenleitungen, ausgebildet. Als Übertragungsmedium bzw. Datenleitungen kommen beispielsweise Schleifleiter in Frage. Auf diese Schleifleiter könnte dann in einem ersten Frequenzbereich eine Datenübertragung aufmoduliert werden, die zur Übertragung von Daten, wie beispielsweise Steuerdaten einer übergeordneten Anlagensteuerung an die beweglichen Netzwerkteilnehmer geeignet ist. Wird nun auf eben diese Schleifleiter zusätzlich die Übermittlung von Fehlersignalen implementiert, so ist dies insbesondere deshalb von Vorteil, da so kein separater Leiter mehr notwendig ist.

In einer vorteilhaften Weiterbildung einer Meldeeinheit weist die Meldeeinheit eine Einspeisevorrichtung auf, die zur Einspeisung einer Trägerspannung in Datenleitungen ausgebildet ist. Bei der Einspeisevorrichtung kann es sich um einen Transformator handeln, der beispielsweise eine vorhandene 400V Wechselspannung in eine 42V Wechselspannung transformiert. Diese Wechselspannung kann dann zum aufmodulieren der Daten im ersten Frequenzbereich verwendet werden. Weiterhin vorteilhaft ist, dass eine Wechselspannung im Bereich von 42V sich positiv auf die Lebensdauer der Schleifleiter und der dazugehörigen Schleifer auswirkt. In der Regel ist diese Einspeisung in einer Master-Meldeeinheit vorgesehen, und kann bei einer Segmentierung des Netzwerks jeweils eines der Segmente versorgen. Für Nachrüstlösungen ist auch eine Einspeisung über die beweglichen Netzwerkteilnehmer denkbar.

Die Aufgabe wird weiterhin durch ein Netzwerk, insbesondere ein Schleifleiternetzwerk, zur Durchführung eines erfindungsgemäßen Verfahrens gelöst. Das Netzwerk weist dazu einen ortsfesten Teil mit mindestens einem Master-Modem und mindestens einen beweglichen Netzwerkteilnehmer mit einem Slave-Modem auf, wobei das Master Modem und das Slave-Modem zum Versenden und/oder Empfangen von Daten im ersten Frequenzbereich ausgebildet sind. Weiterhin weist das Netzwerk eine Master-Meldeeinheit und mindestens eine Slave-Meldeeinheit auf, wobei die Meldeeinheiten zum Senden und/oder Empfangen von Fehlersignalen außerhalb des ersten Frequenzbereichs ausgebildet sind.

In diesem Netzwerk ist es ebenso denkbar, dass eine Integration der Meldeeinheit in ein Modem zum Einsatz kommt. Dies hätte den Vorteil, dass ein Filter / ein Filterelement für das Modem und die Meldeeinheit ausreichend ist.

Weiterhin ist es möglich ein Filterelement derart bereitzustellen, dass dieses als Frequenzweiche arbeitet und die Kommunikationssignale von den Fehlersignalen trennt.

Im Folgenden wird die Erfindung anhand der in den Figuren dargestellten Ausführungsbeispiele näher beschrieben und erläutert. Es zeigen:
- FIG 1: ein Netzwerk mit Meldeeinheiten,
- FIG 2: eine Master-Meldeeinheit,
- FIG 3: eine Slave-Meldeeinheit und
- FIG 4: eine Leiteranordnung.

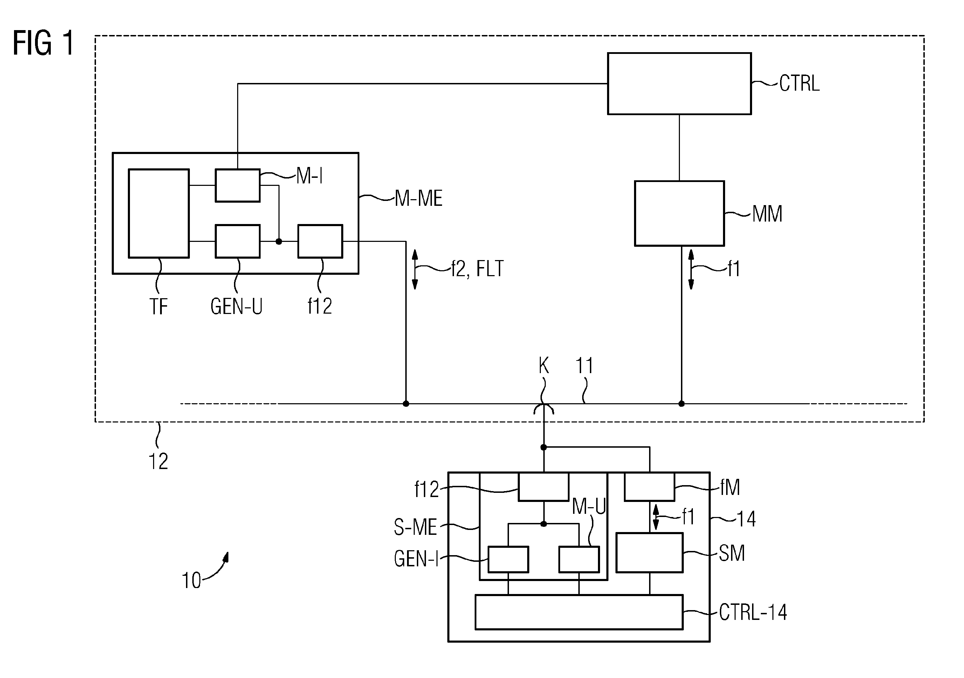

FIG 1 zeigt ein Netzwerk 10 mit einem ortsfesten Teil 12 und einem beweglichen Netzwerkteilnehmer 14. Der bewegliche Netzwerkteilnehmer 14 ist über eine Kontaktanordnung K mit einer Schleifleitung 11 verbunden. Die Kontaktanordnung K kann dabei beispielsweise als Einzel- oder Doppelschleifer ausgeführt sein. Die Schleifleitung 11 muss dabei nicht eine einzelne Leitung sein, sondern kann vielmehr für eine entsprechende Anzahl an Datenleitungen oder Datenschienen stehen. Beispielsweise könnten hier zwei Datenleitungen vorgesehen sein. Die Kontaktanordnung K wäre dann entsprechend vorzusehen. Im ortsfesten Teil 12 des Netzwerks 10 befindet sich eine Anlagensteuerung CTRL, die über ein Master-Modem MM zur Kommunikation in einem ersten Frequenzbereich f1 mit einer Fahrsteuerung CTRL-14 des beweglichen Netzwerkteilnehmers 14 ausgebildet ist. Der bewegliche Netzwerkteilnehmer 14 weist dazu ein Modem-Filterelement fM sowie ein Slave-Modem SM auf, wobei die Fahrsteuerung CTRL-14 über das Slave-Modem SM und das Modemfilterelement fM zur Kommunikation mit der Anlagensteuerung CTRL im ersten Frequenzbereich f1 ausgebildet ist.

Darüber hinaus weist der ortsfeste Teil 12 des Netzwerks 10 eine Master-Meldeeinheit M-ME auf, die zur Kommunikation mit einer Slave-Meldeeinheit S-ME des beweglichen Netzwerkteilnehmers 14 ausgebildet ist. Die Kommunikation zwischen der Master-Meldeeinheit M-ME und der Slave-Meldeeinheit S-ME findet hier über dieselbe Schleifleitung 11 statt, wie die Kommunikation zwischen der Anlagensteuerung CTRL und der Fahrsteuerung CTRL-14 über die Modems MM, SM, allerdings außerhalb des ersten Frequenzbereichs f1. Denkbar ist beispielsweise, dass die Kommunikation zwischen den Meldeeinheiten M-ME und S-ME in einem zweiten Frequenzbereich f2 stattfindet. Die Master-Meldeeinheit M-ME ist dazu mit einer Einspeisevorrichtung TF ausgerüstet. Diese Einspeisevorrichtung TF kann ein Transformator sein, der eine Trägerspannung in die Schleifleiter 11 einspeist. Diese Trägerspannung kann sowohl zur Kommunikation im ersten Frequenzbereich f1 als auch zur Kommunikation im zweiten Frequenzbereich f2 genutzt werden. Die Master-Meldeeinheit M-ME weist weiterhin eine Strom-Messvorrichtung M-I, einen Spannungssignal-Generator GEN-U und ein Filterelement f12 auf. Die Strom-Messvorrichtung M-I erfasst dabei als Fehlerströme ausgebildete Fehlersignale, die außerhalb des ersten Frequenzbereichs f1 übertragen werden. Der Spannungssignal-Generator GEN-U ist dabei dazu vorgesehen, Fehlersignale als Spannungssignal zu übertragen. Es ist aber ebenso denkbar, dass der Spannungssignal-Generator GEN-U lediglich ein Schalter ist, der die Speisespannung abschaltet und damit ebenfalls ein Spannungssignal SIG-U überträgt. Auch eine Realisierung ohne diesen Spannungssignalgenerator GEN-U ist denkbar. Dazu könnte ein komplettes Abschalten der Speisespannung von außen als Fehlersignal von der Spannungs-Messvorrichtung M-U interpretiert werden.

Die Slave-Meldeeinheit S-ME weist ein Filterelement f12 auf, das Signale des ersten Frequenzbereichs f1 von den Fehlersignalen FLT trennt. Weiterhin zu sehen ist, dass ein Stromsignal-Generator GEN-I und eine Spannungs-Messvorrichtung M-U mit der Fahrsteuerung CTRL-14 verbunden sind. Tritt also im beweglichen Netzwerkteilnehmer 14 ein Fehler auf, so kann die Fahrsteuerung CTRL-14 der Stromsignalgenerierung GEN-I einen Fehler melden und diesen über die gemeinsamen Schleifleiter 11 übertragen. Analog ist es möglich, dass die Spannungs-Messvorrichtung M-U einen Spannungsfehler erkennt und dies an die Fahrsteuerung CTRL-14 weitergibt, um beispielsweise eine Abschaltung des beweglichen Netzwerkteilnehmers 14 zu erreichen.

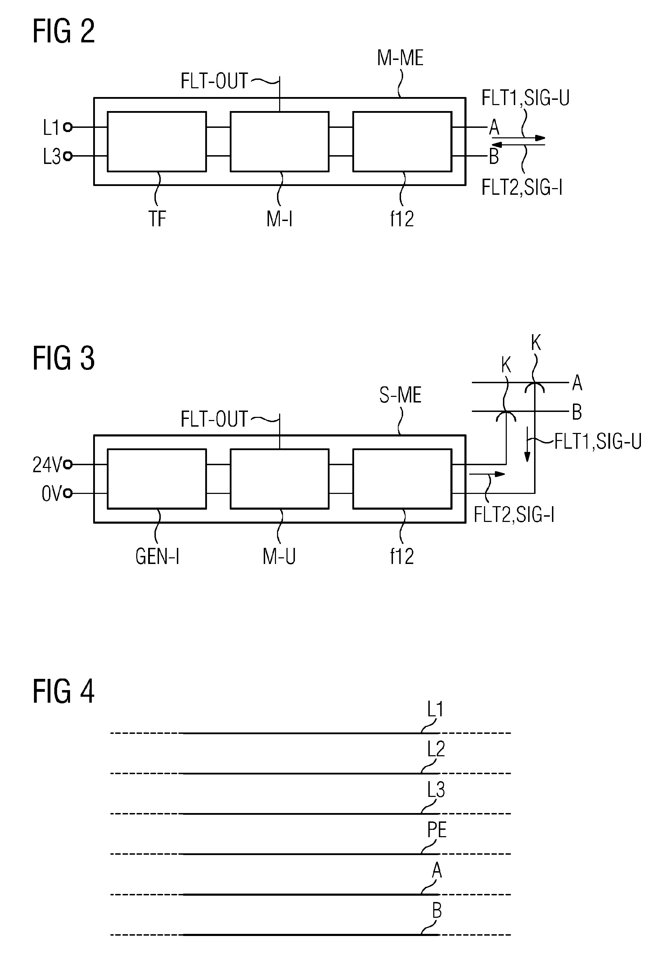

FIG 2 zeigt eine Master-Meldeeinheit M-ME, die eine Einspeisevorrichtung TF, in diesem Fall ein Transformator, eine Strommessvorrichtung M-I und ein Filterelement f12 aufweist. Weiterhin zu sehen sind Datenleitungen A, B sowie die Leiter L1 und L3. Die Strom-Messvorrichtung M-I weist weiterhin einen Fehlerausgang FLT_OUT auf. Zwischen den Leitern L1 und L3 kann dabei beispielsweise eine Wechselspannung von 400 V anliegen. Der Transformator TF wandelt diese dann in eine Wechselspannung von 42 V um. Diese Wechselspannung von 42 V ist dann die Trägerspannung. An den Datenleitungen A, B signalisieren die zwei Pfeile die möglichen Signale, die gesendet bzw. empfangen werden können. Der Pfeil FLT2 bzw. SIG-I ist dabei das zweite Fehlersignal, das in diesem Fall ein Stromsignal SIG-I sein könnte. Dieses zweite Fehlersignal könnte dann von der Strom-Messvorrichtung M-I erfasst werden. Soll nun ein erster Fehler FLT1 von der Master-Meldeeinheit M-ME gesendet werden, so wäre dies in diesem Fall möglich, indem der Leiter, der mit L1 bezeichnet wurde, auf das Potential des Leiters L3 gelegt wird. Damit fällt die Spannung auf 0 V und ein Spannungssignal SIG-U wird als erstes Fehlersignal FLT1 ausgegeben. Dies hat den Vorteil, dass nicht extra ein Spannungssignal-Generator GEN-U vorgesehen werden muss. Der weitere Vorteil, dass ein sicherer Zustand durch das Wegfallen von Spannung erreicht wird, ist ebenfalls gegeben.

FIG 3 zeigt eine Slave-Meldeeinheit S-ME, die einen Stromsignal-Generator GEN-I, eine Spannungs-Messvorrichtung M-U und ein Filterelement f12 aufweist. Die Slave-Meldeeinheit S-ME ist weiterhin über zwei Kontaktvorrichtungen K an die Datenleiter A, B angebunden. Der Stromsignal-Generator GEN-I ist in diesem Fall an ein Potential mit 0 V und ein Potential mit 24 V angebunden. Der Stromsignal-Generator GEN-I kann so über einen geeigneten Widerstand einen Fehlerstrom generieren, der als zweites Fehlersignal FLT2, bzw. als Stromsignal SIG-I, ausgegeben werden kann. In entgegengesetzter Richtung kann ein Spannungssignal SIG-U als erstes Fehlersignal FLT1 von der Spannungs-Messvorrichtung M-U erfasst werden, und über den Fehlerausgang FLT_OUT ausgegeben werden. Es ist ebenso denkbar, dass Signal-Generatoren GEN-I, GEN-U und Messvorrichtungen M-I, M-U in einer weiteren Ausführungsform in einer anderen Art auf die Master-Meldeeinheit M-ME und die Slave-Meldeeinheit S-ME aufgeteilt werden. Dies ist jeweils vom Anwendungsfall abhängig.

FIG 4 zeigt eine mögliche Leiteranordnung in einer Schiene, beispielsweise einer Elektrohängebahn. Zu sehen sind die Leiter L1, L2, L3, ein Schutzleiter PE sowie die Datenleiter A, B. In einer möglichen ausführungsform liegt zwischen den Leitern L1, L2, L3 jeweils ein Potential von 400 V an und von den Leitern gegen Erde L1, L2, L3 jeweils 230 V. Die Datenleiter A, B können weiterhin mit einer Trägerspannung von 42 V versorgt werden.

Zusammenfassend betrifft die Erfindung ein Verfahren zum Übermitteln von Fehlersignalen FLT in einem Netzwerk 10, insbesondere in einem Schleifleiternetzwerk, zwischen einem ortsfesten Teil 12 des Netzwerks 10 und einem beweglichen Netzwerkteilnehmer 14 wobei in dem Netzwerk 10 Daten D in einem ersten Frequenzbereich f1 gesendet und/oder empfangen werden. Um ein Verfahren anzugeben, das es ermöglicht, Fehlersignale FLT in einem Netzwerk 10 schnell und sicher zu übertragen, werden eine Master-Meldeeinheit M-ME und mindestens eine Slave-Meldeeinheit S-ME vorgeschlagen, die Fehlersignale FLT außerhalb des ersten Frequenzbereichs f1 senden und/oder empfangen. Die Erfindung hat weiterhin die Aufgabe, eine Meldeeinheit M-ME, S-ME und ein Netzwerk 10 zur Durchführung des Verfahrens anzugeben.

## Patentansprüche

1. Verfahren zum Übermitteln von Fehlersignalen (FLT) in einem Netzwerk (10), insbesondere in einem Schleifleiternetzwerk, zwischen einem ortsfesten Teil (12) des Netzwerks (10) und einem beweglichen Netzwerkteilnehmer (14), wobei in dem Netzwerk (10) Daten (D) in einem ersten Frequenzbereich (f1) gesendet und/oder empfangen werden und eine Master-Meldeeinheit (M-ME) und mindestens eine Slave-Meldeeinheit (S-ME) Fehlersignale (FLT) außerhalb des ersten Frequenzbereichs (f1) senden und/oder empfangen.

2. Verfahren nach Anspruch 1, wobei die Fehlersignale (FLT) über dasselbe Übertragungsmedium, insbesondere über dieselben Datenleiter (A, B), übertragen werden, wie die Daten im ersten Frequenzbereich.

3. Verfahren nach Anspruch 1 oder 2, wobei die Fehlersignale (FLT) in einem zweiten Frequenzbereich (f2) übermittelt werden.

4. Verfahren nach einem der vorhergehenden Ansprüche, wobei der erste Frequenzbereich (f1) Frequenzen ab 1 MHz aufweist.

5. Verfahren nach einem der Ansprüche 2 bis 3, wobei der zweite Frequenzbereich (f2) Frequenzen unterhalb von 1 MHz, insbesondere unterhalb von 100 Hz, aufweist.

6. Verfahren nach einem der vorhergehenden Ansprüche, wobei ein erstes Fehlersignal (FLT1) als ein Spannungssignal (SIG_U) übertragen wird.

7. Verfahren nach einem der vorhergehenden Ansprüche, wobei ein zweites Fehlersignal (FLT2) als ein Stromsignal (SIG_I) übertragen wird.

8. Verfahren nach einem der vorhergehenden Ansprüche, wobei ein Not-Halt- oder Not-Aus-Signal als Fehlersignal (FLT) übertragen wird.

9. Verfahren nach einem der vorhergehenden Ansprüche, wobei die Fehlersignale (FLT) schneller übertragen werden als die Daten im ersten Frequenzbereich (f1) des Netzwerks (10).

10. Meldeeinheit (M-ME, S-ME) zur Durchführung eines Verfahrens nach einem der Ansprüche 1 bis 9, aufweisend ein Filterelement (f12), der zur Trennung der Fehlersignale (FLT) von den Daten des ersten Frequenzbereichs (f1) ausgebildet ist.

11. Meldeeinheit (M-ME, S-ME) nach Anspruch 10, wobei das Filterelement (f12) zur Trennung der Daten des ersten Frequenzbereichs (f1) von den Fehlersignalen (FLT) des zweiten Frequenzbereichs (f2) ausgebildet ist.

12. Meldeeinheit (M-ME, S-ME) nach Anspruch 10 oder 11, aufweisend eine Strom-Messvorrichtung (M-I) zur Erfassung eines Stromsignals (SIG_I).

13. Meldeeinheit (M-ME, S-ME) nach einem der Ansprüche 10 bis 12, aufweisend eine Spannungs-Messvorrichtung (M-U) zur Erfassung eines Spannungssignals (SIG_U).

14. Meldeeinheit (M-ME, S-ME) nach einem der Ansprüche 10 bis 13, aufweisend einen Spannungssignal-Generator (GEN-U) zur Generierung eines Spannungssignals (SIG_U).

15. Meldeeinheit (M-ME, S-ME) nach einem der Ansprüche 10 bis 14, aufweisend einen Stromsignal-Generator (GEN-I) zur Generierung eines Stromsignals (SIG_I).

16. Meldeeinheit (M-ME, S-ME) nach einem der Ansprüche 10 bis 15, wobei die Meldeeinheit (M-ME, S-ME) zur Übermittlung von Fehlersignalen (FLT) über ein Übertragungsmedium, über das die Daten im ersten Frequenzbereich übertragen werden, insbesondere über dieselben Datenleitungen (A, B), ausgebildet ist.

17. Meldeeinheit (M-ME, S-ME) nach einem der Ansprüche 10 bis 16, wobei die Meldeeinheit (M-ME, S-ME) eine Einspeisevorrichtung (TF) aufweist, die zur Einspeisung einer Trägerspannung in Datenleitungen (A, B) ausgebildet ist.

18. Netzwerk (10), insbesondere ein Schleifleiternetzwerk, zur Durchführung eines Verfahrens nach einem der Ansprüche 1 bis 9, aufweisend einen ortsfesten Teil (12) mit mindestens einem Master-Modem (MM) und mindestens einen beweglichen Netzwerkteilnehmer (14) mit einem Slave-Modem (SM),
wobei das Master Modem (MM) und das Slave-Modem (SM) zum Versenden und/oder Empfangen von Daten im ersten Frequenzbereich (f1) ausgebildet sind,
weiterhin aufweisend eine Master-Meldeeinheit (M-ME) und mindestens eine Slave-Meldeeinheit (S-ME), wobei die Meldeeinheiten (M-ME, S-ME) zum Senden und/oder Empfangen von Fehlersignalen (FLT) außerhalb des ersten Frequenzbereichs (f1) ausgebildet sind.
